# EUROPEAN PATENT APPLICATION

(11) **EP 3 382 631 A1**
(43) Date of publication of application: **03.10.2018**
(21) Application number: 18164156.4
(22) Date of filing: 27.03.2018
(51) Int. Cl.: G06Q 30/02

(54) **METHOD AND SYSTEM FOR MIGRATING USERS ACROSS INTERNET PROPERTIES**

(30) Priority: 29.03.2017 US 201762478053 P; 23.03.2018 US 201815933604
(71) Applicant: Tricoli, Andrea, London NW3 3HX (GB); Fantini, Fabrizio, 86039 Termoli Campobasso (IT)
(72) Inventor: Tricoli, Andrea, London NW3 3HX (GB); Fantini, Fabrizio, 86039 Termoli Campobasso (IT)
(74) Representative: Frontoni, Stefano

(57) **Abstract**

A method for migrating users and user-specific information across internet properties comprising recording at a campaign database of a central server specifics of a campaign with respect to appropriate instances of a first site and a second site, generating a universally unique identifier (UUID) by the central server, the UUID being unique to a user identified in a customer database and to the campaign, presenting an advertising link having the UUID on the first site, loading a landing page of the second site with a consent box upon clicking of the advertising link, fetching user information related to the user from the first site corresponding to the UUID upon receiving consent through the Expressly consent box from the user and migrating the user to the second site by creating a user account of the user on the second site using the user information related to the user.

## Description

### CROSS-REFERENCE TO RELATED APPLICATIONS

This application claims the benefit of US Provisional Application No. 62/478053, filed March 29, 2017, the contents of which are incorporated herein by reference.

### FIELD OF THE INVENTION

The present invention relates to data transfer between websites. More particularly, the present invention relates to a system and method for transferring user specific data between websites.

### BACKGROUND OF THE INVENTION

Electronic commerce or e-commerce websites provide an on-line method for purchasing goods and services. With the growth of the Internet, e-commerce has now become an important part of our economy. Like many other websites, some e-commerce websites allow, for revenue earning or on reciprocal basis, third party product or service advertisement on their websites. Placing advertisements on web pages, shown as banners or links on a page, promotes products and services. The advertising banners having embedded links to the advertiser's page take users to the advertisers' pages when users click on the banners. But, it is not that every user visiting an advertiser's web page after clicking on an advertising banner becomes a member of that website or buys product from that website. In fact, the conversion rates, i.e., the ratio of the number of customers' conversion (e.g., becoming a member or buying a product) to the number of clicks are not encouraging. One of the reasons is that new customers are often put off by lengthy on-boarding process: long registration forms, email verification, complex password rules, payment authorization etc. A large number of online shoppers abandon their online shopping carts before making purchases for this reason. Today, customers clicking on ads (banners, referral links, co-marketing emails) land on new websites as completely anonymous, entrusted visitors and the new websites again need to validate the users' data from scratch, often through multiple-step registration journeys.

Some prior art have tried to overcome the aforesaid problem. For example, single sign-on feature provided by Facebook and Google enables users to sign-in to different applications with a single account. But, to do it the user has to be already logged on to the original account. Mobile collaboration platforms like Button enhance the post-click experience of large advertisers (e.g., Uber, Opentable), specifically with a focus on on-demand services, but they do not offer single-click registration nor the ability to transfer confidential customer details, as they rely on front-end integration rather than back-end. Stripe and Paypal offer universal payment and basket solutions. However, they do not facilitate seamless migration of user from one site to another.

Thus, there exists a need for a system and method that enables smooth and effective user migration across various websites.

### OBJECTS OF THE INVENTION

An object of the present invention is to provide a system and method for enabling single-click user migration across internet properties.

Another object of the present invention is to provide a system and method for increasing conversion rate of user clicking on advertising banners to users actually buying product or service from the advertising website.

A further object of the present invention is to provide a system and method for user migration with creation of separate and independent user account on a co-marketing website using user data available from an originating website.

A still another object of the present invention is to provide a system and method for enabling advertising websites to acquire already verified users from a trusted website without asking the user to resubmit registration information.

Another object of the present invention is to provide a transparent method of user data migration in real time maintaining data privacy with user consent.

These as well as other objects of the present invention are apparent upon inspection of this specification, including the drawings and appendices attached hereto.

### SUMMARY OF THE INVENTION

The following presents a simplified summary in order to provide a basic understanding of some aspects of the disclosed invention. This summary is not an extensive overview, and it is not intended to identify key/critical elements or to delineate the scope thereof. Its sole purpose is to present some concepts in a simplified form as a prelude to the more detailed description that is presented later.

The present invention is directed to a system and method for facilitating user migration from a first website to a second website. The system of the present invention enables two or more partner websites to exchange user data with the consent of the user. The system provides advertising banners or links for a destination site on a source site. The advertising link includes a unique identifier (UUID) which identifies a specific user of source site as well as a specific coupling of originating site and landing site at a given time with respect to a specific advertising campaign agreed between the websites. The system provides plugins for integrating layers of a source site and destination site to the server of the system. When a user registered with the source or originating site clicks an advertising link on the source or originating website, the browser on the client device loads the landing page of the destination website along with a consent box. The server of the system provides this consent box on the landing page so that the user's consent can be obtained for migrating user data from the source website to the destination website. If a user gives consent for user data transfer, the server of the system supplies the user data to the landing website after retrieving it from the source website. The consent box then disappears and a new user account gets created with the landing site. The user can directly place order and make transaction on the landing site without requiring submission of the user data separately to the landing site.

To the accomplishment of the foregoing and related ends, certain illustrative aspects of the disclosed invention are described herein in connection with the following description and the annexed drawings. These aspects are indicative, however, of but a few of the various ways in which the principles disclosed herein can be employed and is intended to include all such aspects and their equivalents. Other advantages and novel features will become apparent from the following detailed description when considered in conjunction with the drawings.

### BRIEF DESCRIPTION OF THE DRAWINGS

In order to describe the manner in which features and other aspects of the present disclosure can be obtained, a more particular description of certain subject matter will be rendered by reference to specific embodiments which are illustrated in the appended drawings. Understanding that these drawings depict only typical embodiments and are not therefore to be considered to be limiting in scope, nor drawn to scale for all embodiments, various embodiments will be described and explained with additional specificity and detail through the use of the accompanying drawings in which:
FIG.1 shows a general architecture of a system for single-click user migration across different websites in accordance with one embodiment of the present invention;
FIG.2 illustrates a flowchart depicting the general steps associated with single-click user migration method in accordance with an embodiment of the present invention;
FIG.3 illustrates an exemplary screenshot showing an advertising link to an advertising website displayed on a webpage of a source website in accordance with one embodiment of the present invention; and
FIG.4 illustrates an exemplary screenshot showing a consent box for user data migration displayed on a landing page of an advertising website in accordance with one embodiment of the present invention.

### DETAILED DESCRIPTION OF THE INVENTION

The following description is presented to enable any person skilled in the art to make and use the invention, and is provided in the context of particular applications of the invention and their requirements. Various modifications to the disclosed embodiments will be readily apparent to those skilled in the art and the general principles defined herein may be applied to other embodiments and applications without departing from the scope of the present invention. Thus, the present invention is not intended to be limited to the embodiments shown, but is to be accorded the widest scope consistent with the principles and features disclosed herein.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

In the interest of clarity, not all of the routine features of the implementations described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another. Moreover, it will be appreciated that such a development effort might be complex and time-consuming, but would nevertheless be a routine undertaking of engineering for those of ordinary skill in the art having the benefit of this disclosure.

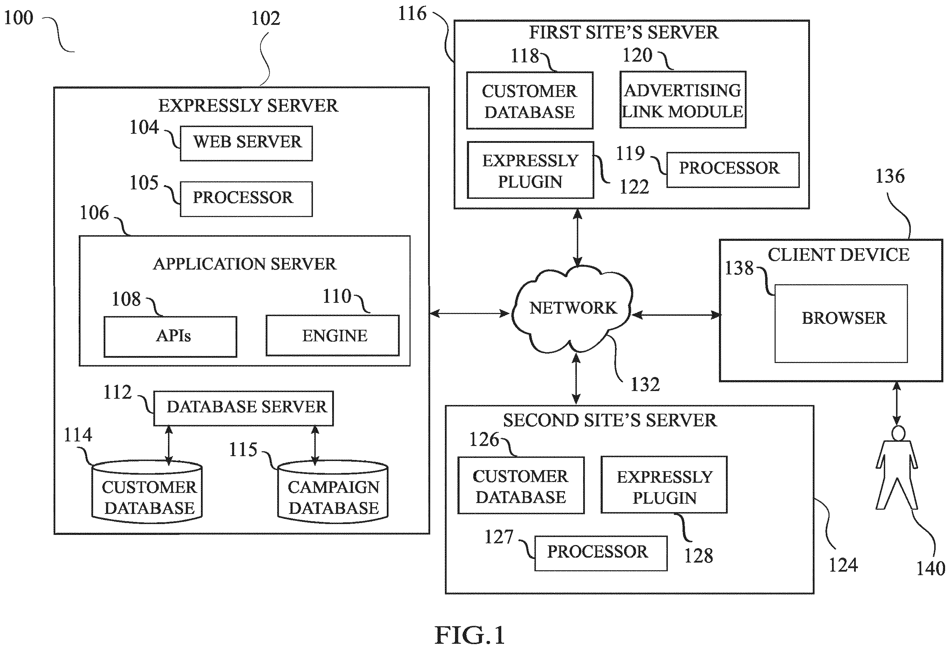

Reference to FIG.1, the system 100 of the present invention comprises a central server 102, two or more third party website servers (e.g. first site's server 116 and second site's server 124) and one or more client devices 136, all communicatively connected to each other through a network 132. In the present example, the central server 102, hereinafter referred to as "Expressly server 102", facilitates migration of user data from a first site to a second site when a user of the first site clicks on an advertising banner on the first site. The term "advertising banner" is used herein to refer to any form of online advertising that embeds an advertisement onto a webpage and provide a URL link to corresponding content information pages. Advertising banners can use text, still or moving graphics, or multimedia messages, and typically serve as hyperlinks such that the user is linked to website advertised in the banner when it is clicked on. The terms "source site", "source website", "originating site" and "originating website" are used herein alternatively and interchangeably. Similarly, the terms "destination site", "destination website", "landing site", "landing website" and "advertising site" are used herein alternatively and interchangeably.

The Expressly server 102 comprises a web server 104, an application server 106 and a database server 112. It will be appreciated that these servers may run on other machines that are accessible by the server machine 102. The application server 106 includes one or more application programming interfaces (APIs) 108 and at least an engine 110. The database server 112, that communicates to the application server 106, contains customer database 114 and campaign database 115 for storing customer information and campaign information respectively, Although, the databases are shown stored at the Expressly server 102, it will be appreciated that databases may be stored at other machines and database data may be uploaded to the Expressly server 102 when necessary.

Web server 104 offers web services to web clients, namely web browsers such as browser 138 installed on client device 136. Primarily, web server 104 retrieves web documents and sends them to a web browser. The one or more APIs 108 serve as the external layer that connect to the first site and second site respectively via the respective Expressly plugin components 122 provided by third party websites, when a relevant request is required depending on a specific client interaction. In general, an API is a particular set of rules and specifications that a software program may follow to access and make use of the services and resources provided by another particular software program that implements that API. The API serves as an interface between different software programs and facilitates their interaction.

The engine component 110 routes requests according to the source site (e.g. first site) based on the specific campaigns as recorded in the campaign database 115 through database server 112. The customer database 114 contains the personal data of users that have previously gone through the migration process. The campaign database 115 contains information regarding time-bound agreements between appropriate instances of an originating site and an advertising site, potentially limited to a specific set of clients. The campaign database also includes the universally unique identifiers (UUIDs) provided with the advertising link which are specific to unique instances of originating/source site, advertising site and client.

The components appearing in the Expressly server 102 refer to an exemplary combination of those components that would need to be assembled to create the infrastructure in order to provide the tools and services contemplated by the present invention. As will be apparent to one skilled in the relevant art(s), all of components "inside" of the Expressly server 102 may be connected and may communicate via a wide or local area network (WAN or LAN).

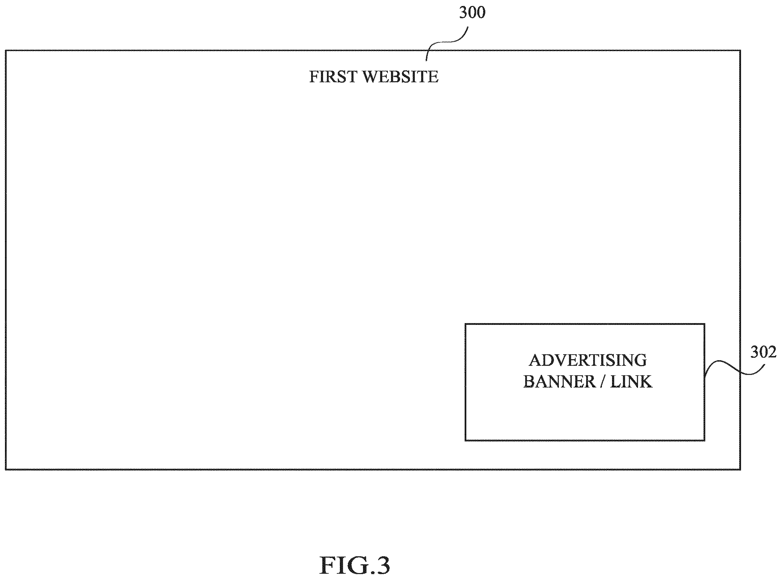

Reference to FIG.1 and FIG.3, the first site's server 116 provides a website, first website 300, for example, on the client device 136 through the browser 138. The first site's server 116 includes a customer database 118, an advertising link module 120 and a plugin 122, also referred to as Expressly plugin 122. The customer database 118 contains personal data of users which may have been collected in a current or past session. This personal data can include first and last name of the user, email address (one or more), phone number (one or more), delivery and billing addresses and other relevant information. The advertising link module 120 provides the advertising link, such as advertising link or banner 302 shown in FIG.3, on the client device's browser. The advertising link contains a UUID that is unique to a specific user as identified in the customer database 118 as well as to the specific couple of first site and second site at a given time, as recorded in the campaign database 115. The plugin 122 is a component that represents the integration layer between the first site's server 116 and Expressly's server 102. Plugin is the set of instructions that allows the two servers to communicate as and when required.

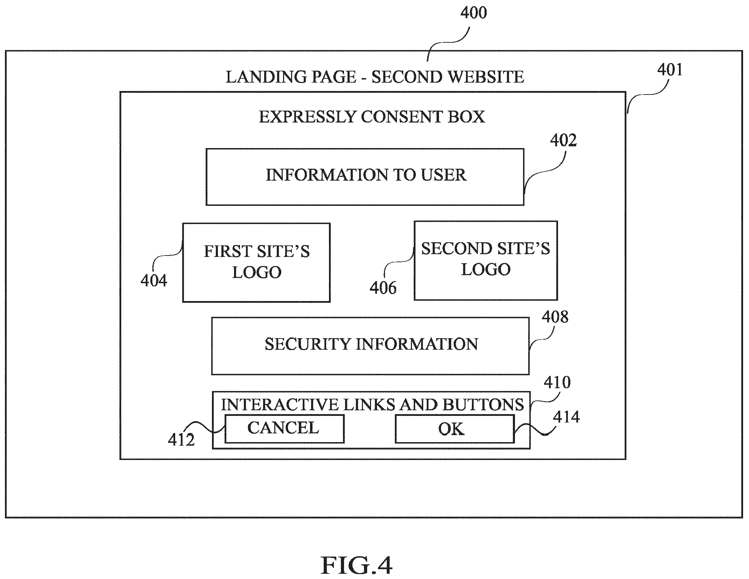

The second site's server 124 comprises a customer database 126 and plugin 128, hereinafter referred to as Expressly plugin 128. The second site's server 124 presents the landing page, such as landing page 400 shown in FIG.4, to which the browser 138 is redirected after the user 140 clicks on the advertising link 302 on the first website 300 of FIG.3. The landing page 400 shows content specific to the second site, as well as to the specific campaign between the first site and the second site as recorded in campaign database 115. The landing page 400 also includes the ability to visualise the Expressly consent box 401 when an appropriate user's Browser visualises such landing page. The customer database 126 of second site's server 124 is a container of personal information where the user account is created if not already present. The plugin 128 of second site's server 124 is a component that represents the integration layer between the second site's server 124 and the Expressly's server 102. Plugin 128 is a set of instructions that allows the two servers to communicate as and when required.

The client device 136 may be any device capable of presenting data and having an input device. The client device 136 may include, but not limited to, personal computers, server computers, mobile devices, tablets, hand-held or laptop devices, smart phones, personal digital assistants or any similar devices. Browser 138 is a graphical browser application that allows a user to view Internet or intranet content. Using the browser 138, the user 140 may interact with, for example, the first website and the second website, to perform tasks such as purchasing goods or services, requesting or viewing information, providing information, or other tasks.

The Expressly server 102, the first site's server 116 and the second site's server 124 may include a processor (processor 105, 119 or 127 as shown in FIG.1). The Expressly server, the first site's server and the second site's server perform a portion or all of the processing steps of the user migration method described herein in response to the processors executing one or more sequences of one or more instructions contained in a memory included in the servers. Such instructions may be read into the memory from another computer readable medium, such as a hard disk or a removable media drive. One or more processors in a multi-processing arrangement may also be employed to execute the sequences of instructions contained in memory. The term "computer readable medium" as used herein refers to any medium that participates in providing instructions to the processors for execution. A computer readable medium may take many forms, including but not limited to, non-volatile media, volatile media, and transmission media. Non-volatile media includes, for example, optical, magnetic disks, and magneto-optical disks, such as the hard disk or the removable media drive.

As used herein, the term "network" generally refers to any collection of distinct networks working together to appear as a single network to a user. The term also refers to the so-called world wide "network of networks" i.e. Internet which is connected to each other using the Internet protocol (IP) and other similar protocols. As described herein, the exemplary public network 132 of FIG. 1 is for descriptive purposes only and it may be wired or wireless. Although the description may refer to terms commonly used in describing particular public networks such as the Internet, the description and concepts equally apply to other public and private computer networks, including systems having architectures dissimilar to that shown in FIG.1.

In the context of the present example, the steps of the present invention are described with reference to FIG.1, FIG.2, FIG.3 and FIG.4 below.

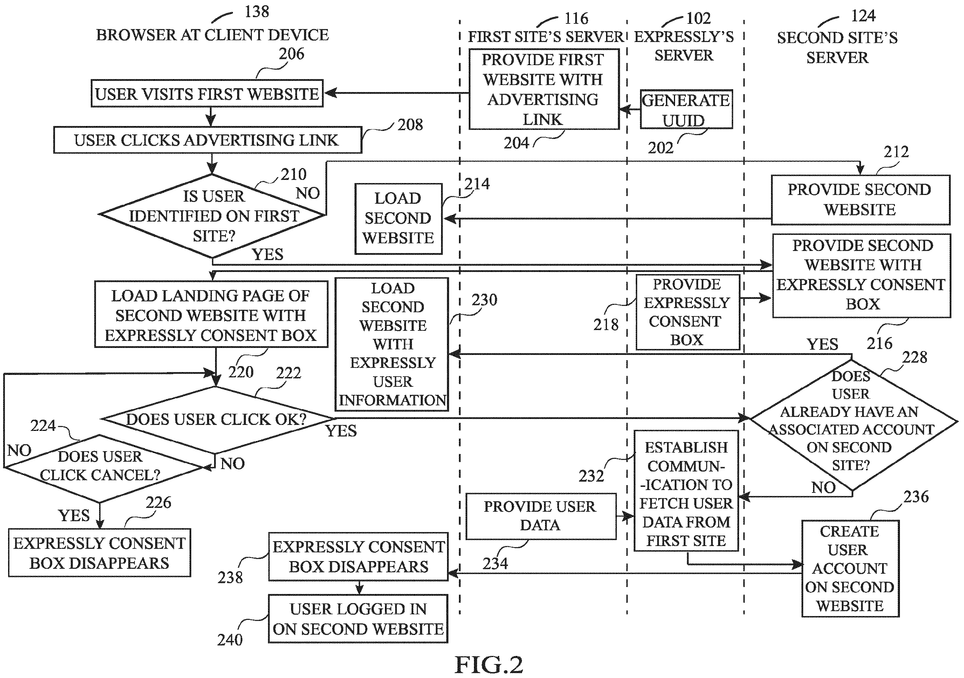

Suppose the second site wants to post an advertising banner on the first site as part of a specific product's/service's advertisement campaign and it also wants to avail the services of Expressly's server 102 for effective customer migration to its site from the first site. The campaign database 115 at Expressly's server 102 will record the specifics of the time-bound agreement between appropriate instances of the first site and the second site, potentially limited to a specific set of clients. The Expressly's server 102 then generates, as in step 202 of FIG.2, universally unique identifiers (UUID) which will be unique to each of the user identified with the customer database 118 of the first site's server 116 as well as to the specific campaign as recorded in the campaign database 115.

Reference to FIG.3, the first site's server 116 presents the advertising link 302 on its website, as in step 204, with the UUIDs remaining embedded with the advertising link 302. A user 140 visiting the first website 300, as in step 206, may click on the advertising link 302 as in step 208. If the user 140 clicks on the advertising link 302 on the first website 300, it is first queried, as in step 210, as to whether the user 140 is a registered user of the first site. If the user 140 is not a registered user of the first website then the second site's server 124 simply presents, as in step 212, on the browser 138 the landing page of the second website as per the link of the advertising link 302 as in step 214. But, if it is found that the user 140 is a registered user identified in the customer database 118 of the first website then second site's server 124 provides the landing page 400 on the second website, as in step 216, along with a consent box 401, hereinafter referred to as Expressly consent box 401 or consent box 401, preferably overlaid upon the landing page 400. The contents of the Expressly consent box 401 are received by the second site's server 124 from Expressly server's APIs 108, as in step 218, through a communication established via the Expressly plugin 128 of the second site's server 124. The browser 138 thus loads the landing page 400 with the Expressly consent box 401 as in step 220.

The content of the Expressly consent box 401 depends on the UUID embedded with the advertising link 302. Reference to FIG.4, the Expressly consent box 401 may comprise information 402 to indicate the user that the second website will receive user information such as basic details, delivery address, email ID etc. of the user from the first website if the user gives consent. The Expressly consent box 401 may further include logos and names of the first website 404 and that of second website 406, a security information 408 assuring the user about the security of the data transfer among the first site, second site and the Expressly's server. The interactive links and buttons 410 provided on the Expressly consent box 401 include two buttons: OK and Cancel, as well as with other informational links.

If the user 140 does not click the OK button 414 on the Expressly consent box 401 in step 222 and, instead, clicks the Cancel button 412 as in step 224, the Expressly consent box 401 disappears, as in step 226, and the browser 138 visualizes the underlying landing page 400 of the second website. If the user clicks links other than those provided outside the Expressly consent box 401 on the second website, then additional pages or tabs, as appropriate, will get opened in the browser 138 without modifying the landing page 400 of the second website. The user can, within the duration of the current session, go back to the page/tab containing second site's landing page to click Cancel, other links, or OK.

If the user 140 decides to give consent to the data migration process then the user 140 may click on the OK button 414. Upon receiving the consent of the user 140, the second site's server 124 then checks its customer database 126 to see if the user 140 already has an account with the second website as in step 228. If it is found that the user 140 already has an account with the second website then the Expressly consent box 401 disappears and, preferably, an Expressly existing user information box is loaded, as in step 230, before the browser 138 visualizes the underlying landing page of the second site. The Expressly existing user information box is loaded to communicate to the user that an account for the user already exists. The box can be dismissed by the user and the flow ends.

If no account is found for the user 140 in the customer database 126 of the second site, then the APIs 108 of the Expressly server 102 establish a communication, as in step 232, between the first site's server 116 and the second site's server 124 via the Expressly plugins 122 and 128 to retrieve the relevant user information from the customer database 118 of the first site's server 116 as identified in the UUID of the advertising link. The first site's server 116 provides the customer user information, as in step 234, and, with this information, the second site creates a new account of the user 140 in the customer database 126 of the second site's server 124. Subsequently, on the landing page 400 of the second website, the Expressly consent box 401 disappears, as in step 238, and the user gets logged in as a registered user as in step 240. In some embodiments, the landing page 400 shows the user information used for the creation of new user account on the second website. The user 140 can, thereafter, interact with the second website as a logged in user.

As is evident from the above described process, the whole process of user data migration from one website to an advertising website occurs in real time and, on the user's part, only a single-click action i.e. the clicking of OK button on the Expressly consent box is needed after a user lands on an advertiser's website. The data migration happens only with the consent of the user and the process does not compel the user to create an account with an advertising website. But, if the user agrees for the data migration then a user account, independent of the user account of the originating site, gets created with the advertising website instantly. This can give the users a great shopping experience and the lead conversion rate through the advertising banners can increase multiple times.

When introducing elements or features of the present disclosure and the exemplary embodiments, the articles "a", "an", "the" and "said" are intended to mean that there are one or more of such elements or features. The terms "comprising", "including" and "having" are intended to be inclusive and mean that there may be additional elements or features other than those specifically noted. It is further to be understood that the method steps, processes, and operations described herein are not to be construed as necessarily requiring their performance in the particular order discussed or illustrated, unless specifically identified as an order of performance. It is also to be understood that additional or alternative steps may be employed.

Flowchart is used to describe the steps of the present invention. While the various steps in this flowchart are presented and described sequentially, some or all of the steps may be executed in different orders, may be combined or omitted, and some or all of the steps may be executed in parallel. Further, in one or more of the embodiments of the invention, one or more of the steps described above may be omitted, repeated, and/or performed in a different order. In addition, additional steps, omitted in the flowchart may be included in performing this method. Accordingly, the specific arrangement of steps shown in FIG.2 should not be construed as limiting the scope of the invention.

## Claims

1. A method for migrating users across internet properties, said method comprising:
recording at a campaign database of a central server one or more specifics of a campaign with respect to one or more appropriate instances of a first site and a second site;
generating a universally unique identifier (UUID) by said central server, said UUID being unique to a user identified in a customer database of said first site as well as to said campaign;
presenting an advertising link on said first site, said advertising link comprising said UUID;
loading a landing page of said second site with a consent box upon clicking of said advertising link by said user if said user is identified on said first site;
fetching a user information related to said user from said first site corresponding to said UUID upon receiving consent through said consent box from said user; and
migrating said user information to said second site by creating a user account of said user on said second site using said user information related to said user.

2. The method of claim 1, wherein said loading of said landing page of said second site with said consent box involves overlaying of said consent box upon said landing page.

3. The method of claim 1, wherein said consent box includes a plurality of information to indicate said user that said second site will receive said user information from said first website if said user gives consent.

4. The method of claim 3, wherein said plurality of information are received by said second site from said central server.

5. The method of claim 1, wherein said user account of said user created on said second site is separate and independent of any account existed on said first site.

6. The method of claim 1, wherein said consent box disappears if said user does not give consent through said consent box.

7. The method of claim 1, wherein if said user clicks on any link provided outside said consent box then additional pages or tabs get opened without modifying said landing page.

8. The method of claim 1, wherein said user is allowed within duration of a current session to go back to said landing page to give consent or cancel said consent box.

9. A system for migrating users across internet properties, said system comprising:
a central server configured to:
record at a campaign database one or more specifics of a campaign with respect to one or more appropriate instances of a first site and a second site; and
generate a universally unique identifier (UUID), said UUID being unique to a user identified in a customer database of said first site as well as to said campaign;
two or more third party website servers and one or more client devices configured to:
present an advertising link on said first site, said advertising link comprising said UUID;
load a landing page of said second site with a consent box upon clicking of said advertising link by said user if said user is identified on said first site;
fetch a user information related to said user from said first site corresponding to said UUID upon receiving consent through said consent box from said user; and
migrating said user information to said second site by creating a user account of said user on said second site using said user information related to said user.

10. The system of claim 9, wherein said loading of said landing page of said second site with said consent box involves overlaying of said consent box upon said landing page.

11. The system of claim 9, wherein said consent box includes a plurality of information to indicate said user that said second site will receive said user information from said first website if said user gives consent.

12. The system of claim 11, wherein said plurality of information are received by said second site from said central server.

13. The system of claim 9, wherein said user account of said user created on said second site is separate and independent of any account existed on said first site.

14. The system of claim 9, wherein said consent box disappears if said user does not give consent through said consent box.

15. A non-transitory computer readable storage medium encoded with instructions, which when executed by one or more processors included in a system, cause said system to perform operations comprising:
recording at a campaign database of a central server one or more specifics of a campaign with respect to one or more appropriate instances of a first site and a second site;
generating a universally unique identifier (UUID) by said central server, said UUID being unique to a user identified in a customer database of said first site as well as to said campaign;
presenting an advertising link on said first site, said advertising link comprising said UUID;
loading a landing page of said second site with a consent box upon clicking of said advertising link by said user if said user is identified on said first site;
fetching a user information related to said user from said first site corresponding to said UUID upon receiving consent through said consent box from said user; and
migrating said user information to said second site by creating a user account of said user on said second site using said user information related to said user,
optionally, wherein said loading of said landing page of said second site with said consent box involves overlaying of said consent box upon said landing page,
optionally, wherein said consent box includes a plurality of information to indicate said user that said second site will receive said user information from said first website if said user gives consent, preferably wherein said plurality of information are received by said second site from said central server,
optionally, wherein said user account of said user created on said second site is separate and independent of any account existed on said first site,
optionally, wherein said consent box disappears if said user does not give consent through said consent box.
